# EUROPÄISCHE PATENTANMELDUNG

(11) **EP 1 106 422 A1**
(43) Veröffentlichungstag der Anmeldung: **13.06.2001**
(21) Anmeldenummer: 00121232.3
(22) Anmeldetag: 02.10.2000
(51) Int. Cl.: B60N 2/16

(54) **Halterung für einen Fahrzeugsitz**

(30) Priorität: 30.11.1999 DE 29921042 U; 08.03.2000 DE 20004347 U
(71) Anmelder: Johnson Controls GmbH, 51399 Burscheid (DE)
(72) Erfinder: Bührmann, Edgar, 47799 Krefeld (DE); Caro, Hans Jürgen, 42113 Wuppertal (DE); Deissman, Bernd, 42369 Wuppertal (DE)
(74) Vertreter: Patentanwälte Dr. Solf & Zapf

(57) **Zusammenfassung**

Die Erfindung betrifft eine Halterung für einen Sitz (1) in einem Fahrzeug, bestehend aus Trägermitteln (8) zum Verbinden des Sitzes (1) mit im Fahrzeug ortsfest anzuordnenden Basismitteln (12). Dabei sind Verstellmittel (14) derart vorgesehen, daß der Sitz (1) etwa in Richtung einer vertikalen Fahrzeug-Hochachse (Z) zwischen zwei definierten Höhenpositionen um einen definierten Höhenversatz (A) verstellbar und in diesen zwei verschiedenen Höhenpositionen jeweils mittels einer Arretiereinrichtung (16) lösbar arretierbar ist. Die erste Höhenposition ist eine angehobene Gebrauchsstellung des Sitzes (1) und die zweite Höhenposition eine abgesenkte Nichtgebrauchsstellung. Bevorzugt sind die Verstellmittel (14) in Anpassung an den Sitz (1) und an Verhältnisse eines benachbarten Laderaumbodens des Fahrzeugs derart ausgelegt, daß der Sitz (1) mit einer Rückfläche (6) einer auf ein unteres Sitzteil (2) umgeklappten Rückenlehne (4) in der zweiten Höhenposition im Wesentlichen in einer gemeinsamen Ebene mit dem Laderaumboden liegt.

## Beschreibung

Die vorliegende Erfindung betrifft eine Halterung für einen Sitz in einem Fahrzeug, bestehend aus Trägermitteln zum Verbinden des Sitzes mit im Fahrzeug ortsfest anzuordnenden Basismitteln.

Es sind zunächst solche Halterungen bekannt, die zum ortsfesten, starren, also nicht verstellbaren, aber in der Regel zum schnellen Sitz-Ausbau lösbaren Befestigen des Sitzes im Fahrzeug konzipiert sind. Weiterhin sind Halterungen mit Längsverstellung des Sitzes bekannt, mit denen die Position des Sitzes in Fahrzeug-Längsrichtung (X-Achse des üblichen Fahrzeug-Koordinatensystems) veränderbar ist, was vor allem eine Anpassung der Position an verschieden große Personen und/oder eine Variabilität bezüglich der Lademöglichkeiten des Fahrzeugs gewährleistet.

Der vorliegenden Erfindung liegt die Aufgabe zugrunde, eine Halterung der genannten Art so zu schaffen, daß eine weitergehende Verbesserung der Nutzungsvariabilität innerhalb des Fahrzeugs mit optimaler Raumausnutzung und optimalem Nutzungskomfort erreicht wird.

Erfindungsgemäß wird dies durch Verstellmittel derart erreicht, daß der Sitz etwa in Richtung einer vertikalen Fahrzeug-Hochachse (Z-Achse des üblichen Fahrzeug-Koordinatensystems) zwischen zwei definierten Höhenpositionen um einen definierten Höhenversatz verstellbar und in diesen zwei verschiedenen Höhenpositionen jeweils mittels einer Arretiereinrichtung lösbar arretierbar ist.

Diese erfindungsgemäße Ausgestaltung eignet sich insbesondere für solche Sitze (Einzelsitze oder Sitzbänke oder auch Teilsitze von Mehrfach-Sitzanordnungen), bei denen eine Rückenlehne um etwa 90° auf ein unteres Sitzpolsterteil umlegbar ist, um eine rückwärtige Lehnenfläche als vergrößerte Ladefläche eines Laderaumes zu nutzen. Bei solchen Anordnungen ergibt sich oftmals ein als Stufe störender Niveau-Unterschied zwischen der eigentlichen Laderaum-Bodenfläche und der Rückfläche der umgeklappten Rückenlehne. Durch die Erfindung kann vorteilhafterweise dieser Niveau-Unterschied auf einfache Weise beseitigt werden, indem der Sitz aus seiner normalen, angehobenen Gebrauchsstellung mit umgeklappter Rückenlehne nach unten in eine abgesenkte Nichtgebrauchsstellung gebracht wird. Dabei sind die Verstellmittel erfindungsgemäß in Anpassung an den Sitz sowie an die fahrzeugspezifischen Verhältnisse des benachbarten Laderaumbodens derart ausgelegt, daß der Sitz mit der Rückfläche der auf das Sitzpolsterteil umgeklappten Rückenlehne in der Nichtgebrauchsstellung (zweite Höhenposition) im Wesentlichen in einer gemeinsamen Ebene mit dem Laderaumboden liegt.

Auf diese Weise kann ein guter Nutzungskomfort erreicht werden. Einerseits können in der angehobenen Gebrauchsstellung günstige Sitzverhältnisse für den Fahrgast erreicht werden, vor allem was den vertikalen Abstand zwischen der Sitzfläche und dem Fahrzeugboden zum Aufstellen der Füße betrifft. Andererseits erleichtert die einheitliche Ebene des um die umgeklappte Rückenlehne vergrößerten Laderaumbodens das Be- und Entladen des Fahrzeugs, und zwar insbesondere wenn es sich um schwergewichtiges und/oder großflächiges Ladegut handelt. Zudem wird eine großflächige, kippfreie Lagerung des Transportgutes erreicht, wodurch sich auch die Fahrsicherheit erhöht.

Weitere vorteilhafte Ausgestaltungsmerkmale der Erfindung sind in den Unteransprüchen enthalten.

Anhand eines in der Zeichnung dargestellten, bevorzugten Ausführungsbeispiels soll die Erfindung genauer erläutert werden. Dabei zeigen:
- Fig. 1: eine Perspektivansicht eines mit einer erfindungsgemäßen Halterung ausgestatteten Fahrzeug-Sitzes,
- Fig. 2: eine detailliertere Ansicht der funktionswesentlichen Bestandteile der Halterung schräg von unten und vorne in den unteren Sitzbereich in Pfeilrichtung II gemäß Fig. 1 unter Weglassung von für die Erfindung unwesentlichen Polsterelementen,
- Fig. 3: eine Ansicht schräg von oben in Pfeilrichtung III gemäß Fig. 2 in der ersten Höhenposition bzw. Sitz-Gebrauchsstellung,
- Fig. 4: eine Ansicht wie in Fig. 3, jedoch in der zweiten, abgesenkten Höhenposition bzw. Sitz-Nichtgebrauchsstellung,
- Fig. 5: eine perspektivische Seitenansicht eines unteren Sitzteils mit einer alternativen Ausführungsform der erfindungsgemäßen Halterung zur Höhenverstellung, wobei die obere Höhenposition dargestellt ist,
- Fig. 6: eine Ansicht wie in Fig. 5, jedoch in der unteren Höhenposition,
- Fig. 7: eine Detailansicht einer - zu Fig. 2 bis 4 alternativen - Verriegelungseinrichtung für die Höhenverstellung,
- Fig. 8: eine perspektivische Detailansicht von zusätzlichen Querverstellmitteln in einem entriegelten Zustand zur Seitenverstellung des Sitzes,
- Fig. 9: eine Ansicht wie in Fig. 8 aus einem etwas anderen Blickwinkel im verriegelten Zustand einer von zwei möglichen Seitenpositionen und
- Fig. 10: eine weitere Einzelheit der Querverstellmittel nach Fig. 8 und 9.

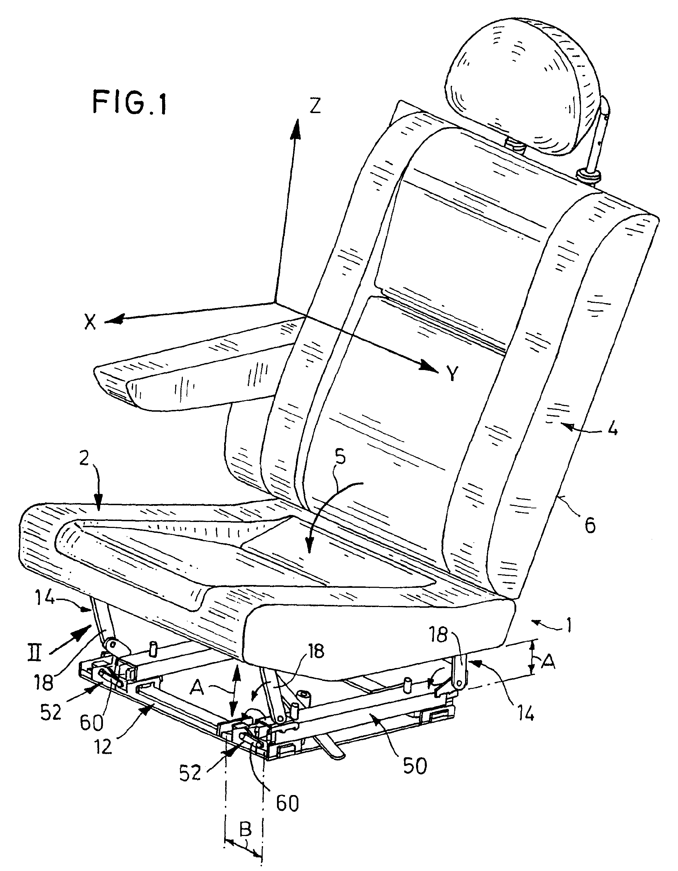

In Fig. 1 ist beispielhaft ein Einzel-Sitz 1 dargestellt, bei dem es sich auch um einen Teilsitz einer sitzbankartigen Mehrfach-Sitzanlage handeln kann. Zudem kann der Sitz 1 auch mit um ein mehrfaches vergrößerter Breite, also als einheitliche Sitzbank ausgebildet sein. Der Sitz 1 besteht aus einem unteren Sitz(polster)teil 2 und einer damit gelenkig verbundenen Rückenlehne 4, die in Pfeilrichtung 5 nach vorne und unten so auf das Sitzteil 2 umklappbar ist, daß dann ihre Rückfläche 6 oben liegt und als zusätzliche, den "normalen" Laderaum vergrößernde Ladefläche genutzt werden kann.

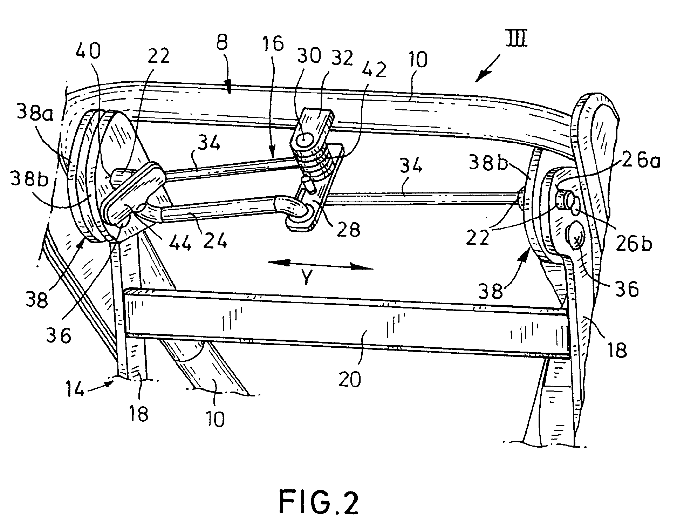

Der Sitz 1 weist Trägermittel 8 - gemäß Fig. 2 bevorzugt in Form eines Traggestells 10 - auf, wobei die Trägermittel 8 mit im Fahrzeug ortsfest anzuordnenden Basismitteln 12 (siehe Fig. 1) verbunden sind.

Erfindungsgemäß sind die Trägermittel 8 über Verstellmittel 14 derart mit den Basismitteln 12 verbunden, daß der Sitz 1 zumindest etwa in Richtung einer vertikalen Fahrzeug-Hochachse Z (vgl. hierzu das in Fig. 1 eingezeichnete, übliche Fahrzeug-Koordinatensystem mit einer horizontalen Fahrzeug-Längsachse X, einer horizontalen Fahrzeug-Querachse Y und der vertikalen Fahrzeug-Hochachse Z) zwischen zwei definierten Höhenpositionen um einen definierten Höhenversatz A verstellbar und in diesen verschiedenen Höhenpositionen jeweils mittels einer Arretiereinrichtung 16 (vgl. Fig. 2 bis 4) lösbar arretierbar ist.

Bei der ersten Höhenposition handelt es sich um eine angehobene Gebrauchsstellung des Sitzes 1 und bei der zweiten Höhenposition um eine abgesenkte Nichtgebrauchsstellung. Das Heben bzw. Senken des Sitzes 1 erfolgt nach Lösen der Arretiereinrichtung 16 jeweils bevorzugt manuell, allerdings könnten grundsätzlich auch Antriebsmittel vorgesehen sein. Die Verstellmittel 14 sind erfindungsgemäß in Anpassung an den Sitz 1 und an die jeweiligen fahrzeugspezifischen Verhältnisse vor allem relativ zu einem benachbarten, nicht dargestellten Laderaumboden des Fahrzeugs derart ausgelegt, daß der Sitz 1 im umgeklappten Zustand der Rückenlehne 4 mit deren Rückfläche 6 in der zweiten Höhenposition (Nichtgebrauchsstellung) im Wesentlichen in einer gemeinsamen Ebene mit dem Laderaumboden liegt.

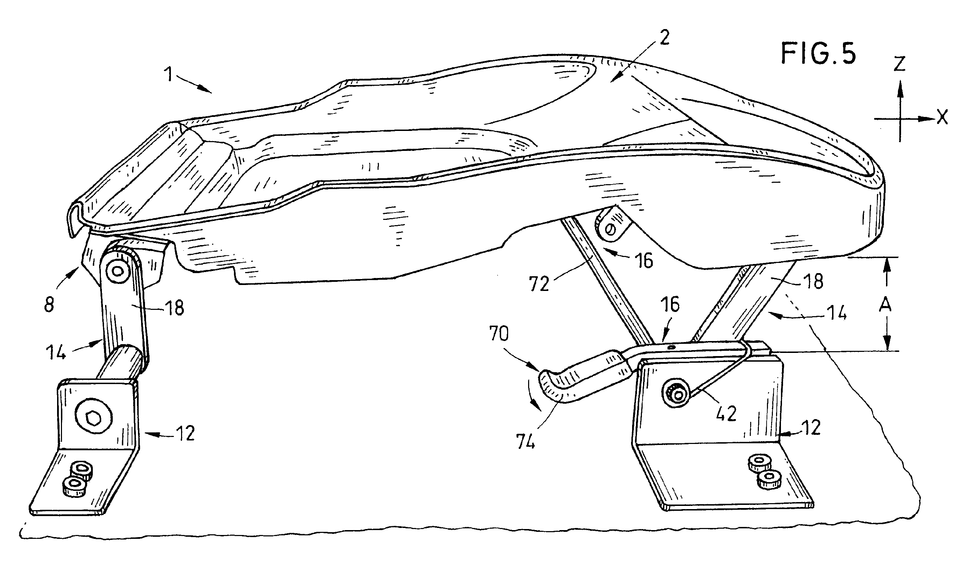

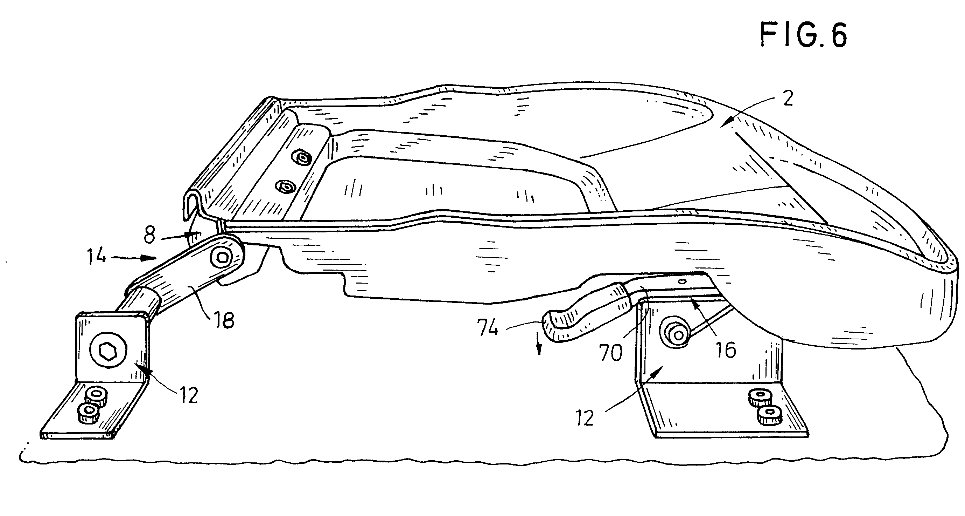

In den dargestellten Ausführungsformen weisen die Verstellmittel 14 eine Schwingeneinrichtung mit vorzugsweise vier den Sitz 1 bzw. die Trägermittel 8 mit den Basismitteln 12 verbindenden Schwingengelenkarmen 18 auf. Es handelt sich folglich um das Prinzip eines Viergelenkgetriebes. Die jeweils gelenkig mit dem Sitz 1 bzw. den Trägermitteln 8 einerseits und den Basismitteln 12 andererseits verbundenen Schwingengelenkarme 18 führen zwischen den beiden Höhenpositionen des Sitzes 1 eine Schwenkbewegung über einen bestimmten Schwenkwinkel von jeweils ungefähr 90° hinweg aus. In der in Fig. 1 und auch in Fig. 5 dargestellten Gebrauchsstellung des Sitzes 1 (angehobene erste Höhenposition) fungieren die Schwingengelenkarme 18 auch praktisch als Tragfüße für den Sitz 1. In der abgesenkten Nichtgebrauchsstellung (vgl. Fig. 6) kann der Sitz 1 zumindest bereichsweise und insbesondere über elastische Auflagelemente auf den Basismitteln 12 abgestützt sein. Wie sich aus Fig. 2 bis 4 ergibt, können zweckmäßigerweise die Schwingengelenkarme 18 jeweils paarweise über Querstreben 20 miteinander verbunden sein. Hierdurch wird eine erhöhte Stabilität gewährleistet.

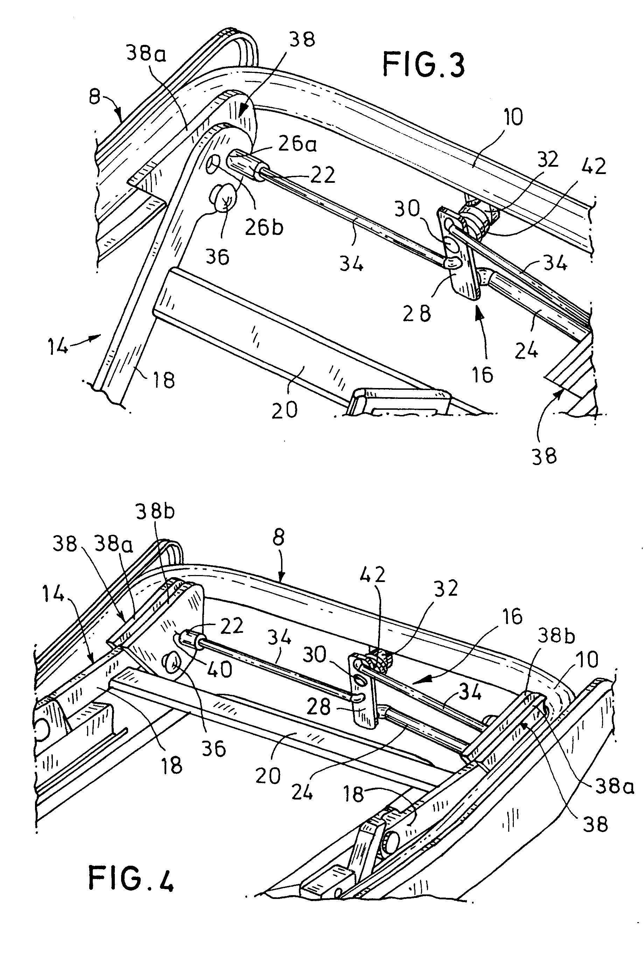

Bei der Ausführung nach Fig. 2 bis 4 besteht die Arretiereinrichtung 16 vorzugsweise aus zwei bolzen- bzw. riegelartigen, mit den Verstellmitteln 14 in den beiden verschiedenen Höhenpositionen zusammenwirkenden Sperrelementen 22. Jedes Sperrelement 22 ist aus einer vorzugsweise federkraftbedingten Sperrstellung manuell mittels eines hebelartigen Betätigungselementes 24 in eine Freigabestellung bewegbar, in der dann die Schwingengelenkarme 18 zum Überführen in die jeweils andere Höhenposition freigegeben werden. Jedes Sperrelement 22 wirkt mit einem der Schwingengelenkarme 18 zusammen, wobei diese beiden Schwingengelenkarme 18 jeweils zwei Sperröffnungen 26a und 26b aufweisen, in die das jeweilige Sperrelement 22 in der ersten oder der zweiten Höhenposition eingreift, und zwar in einer zur Bewegungsebene des Schwingengelenkarms 18 im Wesentlichen senkrechten Richtung entsprechend der Fahrzeug-Querachse Y. Dazu sei bemerkt, daß in den Fig. 2 und 3 durch eine Weglassung eines bestimmten Bestandteils der Bereich der Sperröffnungen 26a, b sichtbar gemacht wurde.

Die beiden Sperrelemente 22 sind über einen Drehhebel 28 mittels desselben Betätigungselementes 24 betätigbar und wirken mit entsprechenden Sperröffnungen 26a, b von zwei parallel in Richtung der Fahrzeug-Querachse Y beabstandet angeordneten Schwingengelenkarmen 18 zusammen. Der Drehhebel 28 ist als Doppelhebel bzw. zweischenkliger Hebel ausgebildet und über eine Achse 30 drehbzw. schwenkbar an einem ortsfest am Traggestell 10 angeordneten Lagerteil 32 befestigt. Die beiden beidseitig der Achse 30 gebildeten Teilhebel sind jeweils über eine Zugstange 34 mit dem zugehörigen Sperrelement 22 verbunden. An einer einendigen Verlängerung des Drehhebels 28 greift das hebelartige Betätigungselement 24 an. Dadurch kann mittels des Betätigungselementes 24 der Drehhebel 28 so verdreht werden, daß über die Zugstangen 34 die Sperrelemente 22 aus der jeweiligen Sperröffnung 26a bzw. b heraus in eine Freigabestellung gezogen werden können. Jeder mit der Arretiereinrichtung 16 zusammenwirkende Schwingengelenkarm 18 weist einen sich über seine Schwenkachse 36 hinaus erstreckenden Abschnitt auf, der die beiden Sperröffnungen 26b, b aufweist und in einem Schloßgehäuse 38 geführt ist. Das Schloßgehäuse 38 ist mit Vorteil in einfacher Weise von zwei parallel beabstandeten Blechteilen 38a und 38b gebildet, zwischen denen der Schwingengelenkarm 18 mit seinem Endabschnitt geführt ist. In Fig. 2 ist rechts das Blechteil 38a weggelassen und in Fig. 3 links das Blechteil 38b, um den Endabschnitt des Schwingengelenkarms mit den Sperröffnungen sichtbar zu machen. Jedes Sperrelement 22 sitzt verschieblich in Richtung der Y-Achse in einer Führungsöffnung 40 des Schloßgehäuses 38 (siehe insbesondere Fig. 2 und 4). Die Sperröffnungen 26a, b sind derart angeordnet, daß sie in der ersten bzw. der zweiten Höhenposition des Sitzes 1 zum Eingreifen des Sperrelementes 22 diesem und der jeweiligen Führungsöffnung 40 gegenüberliegend angeordnet sind. Zur Gewährleistung der federkraftbedingten Sperrstellung ist ein Federelement 42 vorgesehen, welches vorzugsweise als gewundene Schenkelfeder ausgebildet und zur Beaufschlagung des Drehhebels 28 auf dessen Drehachse 30 angeordnet ist. Dabei stützt sich das Federelement 42 einerseits an dem Lagerteil 32 und andererseits an dem Drehhebel 28 derart ab, daß der Drehhebel 28 mit Federkraft in derjenigen Drehrichtung beaufschlagt wird, daß die Sperrelemente 22 über die Zugstangen 34 in ihre Eingriffsstellung bewegt (gedrückt) werden.

Das Betätigungselement 24 kann gemäß Fig. 2 mit Vorteil einen ergonomisch gestalteten Handhabungsgriff aufweisen.

Wie sich aus Fig. 1 ergibt, kann die erfindungsgemäße Sitz-Höhenverstellung mit zusätzlichen Längsführungsmitteln 50 kombiniert sein, um den Sitz 1 auch in Richtung der horizontalen Fahrzeug-Längsachse X verstellen zu können. Es kann sich um eine übliche Schienenführung handeln.

Zudem können die Höhen-Verstellmittel 14 auch mit zusätzlichen Querverstellmitteln 52 derart kombiniert sein, daß der Sitz 1 in Richtung der Querachse Y relativ zu den Basismitteln 12 zwischen zwei definierten Seitenpositionen um einen definierten Seitenversatz B (Fig. 1) verstellbar und in den beiden Seitenpositionen jeweils lösbar arretierbar ist.

In der in Fig. 1 dargestellten Ausführung sind die Querverstellmittel 52 als Parallelschwingeneinrichtung mit vier Schwingengelenkarmen 60 ausgebildet, die zwischen den beiden Seitenpositionen jeweils eine Schwenkbewegung nach oben über einen oberen Totpunkt hinweg und somit über einen Schwenkwinkel von insgesamt etwa 180° bis in die jeweils andere Seitenposition ausführen.

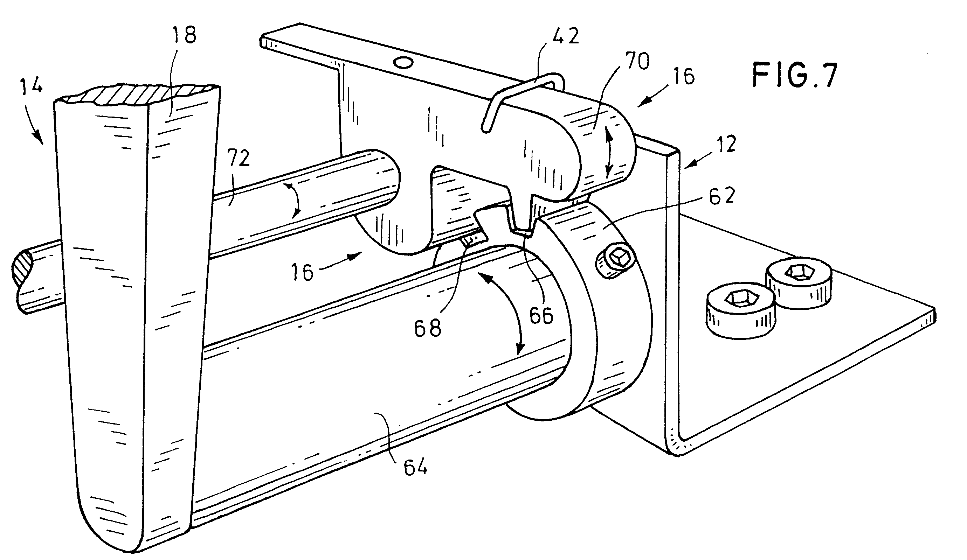

Was nun die Ausführungsform der Sitz-Halterung nach Fig. 5 bis 10 betrifft, so sind dabei zunächst die Höhen-Verstellmittel 14 weitgehend analog zur Ausführung nach Fig. 1 bis 4 mit den Schwingengelenkarmen 18 ausgebildet. Unterschiedlich ist dabei allerdings die Art der Arretiereinrichtung 16, die hier nicht im oberen Bereich der Schwingengelenkarme 18 angeordnet ist, sondern vielmehr im unteren Bereich von vorzugsweise zwei in Y-Richtung gegenüberliegenden Schwingengelenkarmen 18. Wie sich insbesondere aus Fig. 7 ergibt, ist dabei jeweils ein vorzugsweise ringförmiges Arretierelement 62 drehmomentschlüssig auf einer Drehwelle 64 des jeweiligen Schwingengelenkarms 18 angeordnet. Dieses Arretierelement 62 weist zwei radiale Arretierausnehmungen 66,68 auf, die durch ihre Ausrichtung relativ zu der Drehwelle 64 und damit auch relativ zu dem Schwingengelenkarm 18 die beiden Höhenpositionen des Sitzes 1 festlegen. Dazu ist als Sperrelement 22 ein Arretierhebel 70 vorgesehen, der in den beiden Höhenpositionen bzw. Schwenkstellungen des Schwingengelenkarms 18 jeweils radial in eine der beiden Arretierausnehmungen 66 oder 68 lösbar eingreift. Der Arretierhebel 70 kann unmittelbar manuell betätigt werden. In der dargestellten, bevorzugten Ausführungsform sind zwei in Richtung der Querachse Y gegenüberliegende Arretierhebel 70 über eine gemeinsame Arretierwelle 72 drehmomentschlüssig miteinander verbunden, wobei jeder Arretierhebel 70 mit einem gesonderten Arretierelement 62 der beiden gegenüberliegenden Schwingengelenkarme 18 zusammenwirkt. Mindestens einer der beiden Arretierhebel 70 weist gemäß Fig. 5 und 6 an seinem freien Betätigungsende einen geeigneten Handgriff 74 auf. Auch bei dieser Ausführung der Arretiereinrichtung 16 ist mindestens ein Federelement 42 vorgesehen, um den bzw. jeden Arretierhebel 70 durch Federkraft zwangsweise in seiner Eingriffstellung zu halten. Das Federelement 42 ist hier als gewundene Schenkelfeder ausgebildet, die wenigstens einen der Arretierhebel 70 direkt beaufschlagt.

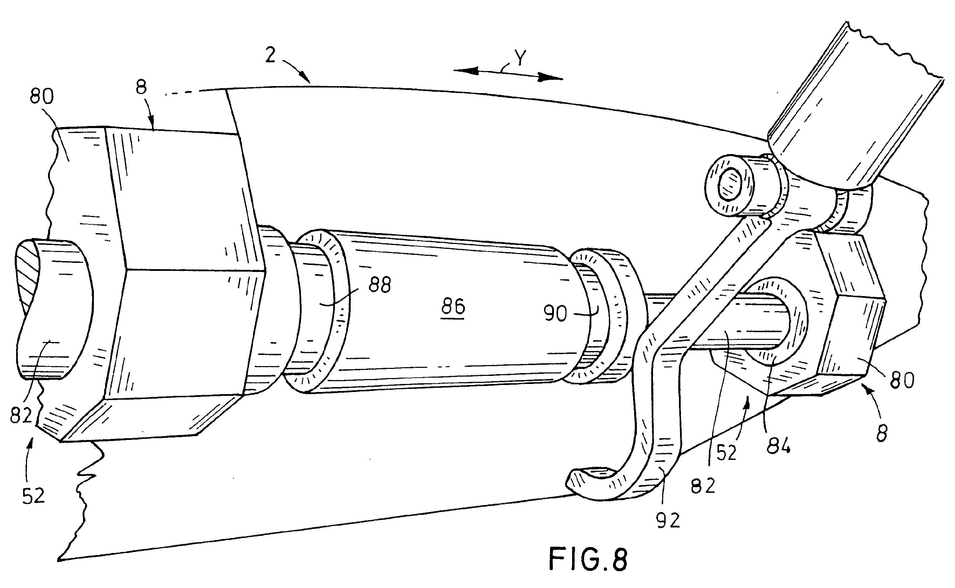

Wie sich ferner aus Fig. 8 bis 10 ergibt, sind bei dieser Ausführungsform ebenfalls Querverstellmittel 52 vorgesehen, hier allerdings als Schiebeführung. Hierbei sind als Trägermittel 8 für den Sitz 1 auf dessen Unterseite blockartige Lagerelemente 80 befestigt, die auf zueinander parallelen Querträgern 82 verschiebbar geführt sind. Die Querträger 82 sind mit den Basismitteln 12 über die Verstellmittel 14 verbunden. Vorzugsweise sind insgesamt vier Lagerelemente 80 paarweise zu je zwei seitlich in Y-Richtung voneinander beabstandeten Lagerelementen 80 vorgesehen. Dabei sind auch zwei zueinander parallele Querträger 82 vorgesehen, und auf jedem Querträger 82 sind zwei der Lagerelemente 80 geführt. Die Querträger 82 bestehen vorzugsweise aus Rohrprofilen mit kreisförmigem Querschnitt. Die Lagerelemente 80 sind vorteilhafterweise auf den Rohrprofilen über Wälz- oder Gleitlager geführt, insbesondere über Kugelkäfigelemente (siehe in Fig. 8 die Bezugsziffer 84). Somit ist hierbei der Sitz 1 zusammen mit den Lagerelementen 80 auf den Querträgern 82 in Y-Richtung verschiebbar.

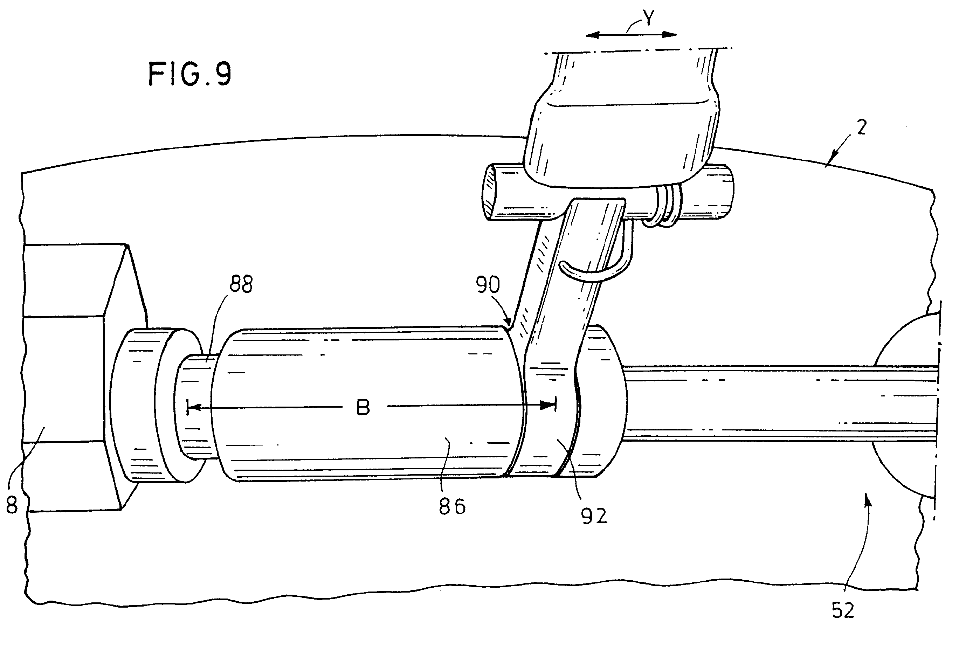

Gemäß Fig. 8 und 9 weist (mindestens) einer der beiden Querträger 82 in seinem zwischen den Lagerelementen 80 liegenden Bereich ein Arretierelement 86 auf. Dieses Arretierelement 86 weist zwei insbesondere ringnutförmige Ausnehmungen 88 und 90 auf, die die definierten, um den Seitenversatz B beabstandeten Positionen des Sitzes 1 festlegen. An dem Sitz 1 ist ein Arretierhebel 92 derart gelagert, daß er lösbar in jeweils eine der beiden Ausnehmungen 88 oder 90 eingreifen kann. Das Arretierelement 86 ist vorzugsweise von einer fest auf dem Querträger 82 sitzenden Hülse gebildet. Da somit die Ausnehmungen 88,90 ringnutförmig ausgebildet sind, weist der Arretierhebel 92 vorzugsweise ein freies Ende auf, welches einen an den Krümmungsradius der Ausnehmungen 88,90 angepaßten, bogenförmigen Verlauf aufweist. Gemäß Fig. 9 greift dadurch der Arretierhebel 92 über einen relativ großen Winkelbereich in die jeweilige Ausnehmung 90 (oder 88) ein, so daß eine sehr gute und sichere Arretierung gewährleistet ist.

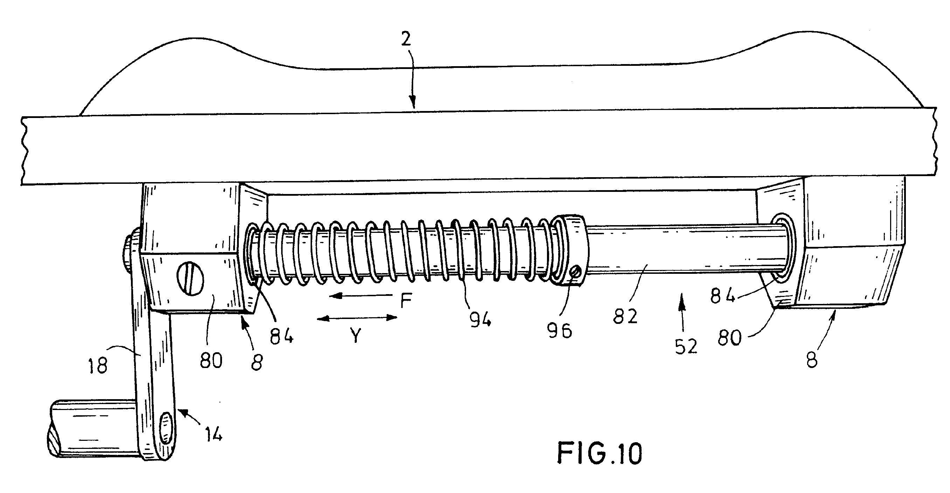

Bei dieser Ausführung der Seitenverstellung ist außerdem bevorzugt vorgesehen, daß eine der beiden definierten Positionen eine durch Federkraft F (siehe Fig. 10) erreichbare Vorzugsposition darstellt. Dazu ist (mindestens) eine Druckfeder 94 zwischen einem der Lagerelemente 80 und einem ortsfest auf dem Querträger 82 angeordneten Widerlager 96 angeordnet. Je nach dem, welche der beiden Seitenpositionen die Vorzugsposition sein soll, ist die Druckfeder 94 auf der einen oder der anderen Seite des Widerlagers 96 angeordnet. Die Druckfeder 94 ist hierbei bevorzugt als Schraubendruckfeder ausgebildet und umschließt dabei den Querträger 82 koaxial, und zwar insbesondere denjenigen Querträger 82, der nicht mit dem Arretierelement 86 nach Fig. 8 und 9 ausgestattet ist. Das Widerlager 96 wird zweckmäßigerweise von einem auf dem Querträger 82 befestigen Ringelement gebildet.

Es sei noch erwähnt, daß jeder Querträger 82 beidendig mit zwei Schwingengelenkarmen 18 der Verstellmittel verbunden ist. Somit werden die Seitenverstellmittel zusammen mit dem Sitz in der Höhenposition verstellt. Allerdings ist bevorzugt vorgesehen, daß ein Absenken des Sitzes 1 nur in der Vorzugsposition der Seitenverstellung möglich ist, während eine Verschiebung des Sitzes 1 aus der Vorzugsposition in eine seitlich versetzte Position nur in der angehobenen, oberen Höhenpositon möglich ist. Diese Funktionen werden durch geeignete, hier nicht beschriebene Sperrmittel sichergestellt.

Abschließend sei zu den Höhenverstellmitteln 14 unter Bezug auf Fig. 1 sowie auf Fig. 5 und 6 noch erwähnt, daß durch eine unterschiedliche Längenauslegung der Schwingengelenkarme 18 auf der Sitz-Vorderseite relativ zur Sitz-Hinterseite die Möglichkeit besteht, in den beiden unterschiedlichen Höhenpositionen des Sitzes 1 auch dessen Sitzneigung relativ zur Horizontalen bzw. zu einem Fahrzeugboden zu verändern. In der in Fig. 1 und 5 dargestellten Gebrauchsstellung hat das untere Sitzteil 2 eine geringfügige Neigung schräg nach hinten, indem die vorderen Schwingengelenkarme 18 länger als die hinteren Schwingengelenkarme 18 ausgebildet sind. In der durch Verschwenken der Schwingengelenkarme 18 erreichten, abgesenkten Nichtgebrauchsstellung liegt dann das Sitzteil 2 etwa parallel zu den Basismitteln 12 bzw. zum Fahrzeugboden.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Halterung für einen Sitz (1) in einem Fahrzeug, bestehend aus Trägermitteln (8) zum Verbinden des Sitzes (1) mit im Fahrzeug ortsfest anzuordnenden Basismitteln (12),
**gekennzeichnet** durch Verstellmittel (14) derart, daβ der Sitz (1) etwa in Richtung einer vertikalen Fahrzeug-Hochachse (Z) zwischen zwei definierten Höhenpositionen um einen definierten Höhenversatz (A) verstellbar und in diesen zwei verschiedenen Höhenpositionen jeweils mittels einer Arretiereinrichtung (16) lösbar arretierbar ist.

2. Halterung nach Anspruch 1,
**dadurch gekennzeichnet**,
daß die erste Höhenposition eine angehobene Gebrauchsstellung des Sitzes (1) und die zweite Höhenposition eine abgesenkte Nichtgebrauchsstellung sind.

3. Halterung nach Anspruch 1 oder 2,
**dadurch gekennzeichnet**,
daß die Verstellmittel (14) in Anpassung an den Sitz (1) und an Verhältnisse eines benachbarten Laderaumbodens des Fahrzeugs derart ausgelegt sind, daß der Sitz (1) mit einer Rückfläche (6) einer auf ein unteres Sitzteil (2) umgeklappten Rückenlehne (4) in der zweiten Höhenposition im Wesentlichen in einer gemeinsamen Ebene mit dem Laderaumboden liegt.

4. Halterung nach einem der Ansprüche 1 bis 3,
**dadurch gekennzeichnet**,
daß die Verstellmittel (14) als Schwingeneinrichtung mit vorzugsweise vier den Sitz (1) bzw. die Trägermittel (8) mit den Basismitteln (12) verbindenden Schwingengelenkarmen (18) ausgebildet sind.

5. Halterung nach einem der Ansprüche 1 bis 4,
**dadurch gekennzeichnet**,
daß die Arretiereinrichtung (16) mindestens ein mit den Verstellmitteln (14) in den beiden Höhenpositionen zusammenwirkendes Sperrelement (22) aufweist, welches aus einer vorzugsweise federkraftbedingten Sperrstellung mittels eines Betätigungselementes (24) in eine Freigabestellung bewegbar ist.

6. Halterung nach Anspruch 5,
**dadurch gekennzeichnet**,
daß mindestens einer der Schwingengelenkarme (18) zwei Sperröffnungen (26a, 26b) aufweist, in die das Sperrelement (22) in der ersten bzw. zweiten Höhenposition in einer zur Bewegungsebene des Schwingengelenkarms (18) im Wesentlichen senkrechten Richtung eingreift.

7. Halterung nach Anspruch 5 oder 6,
**dadurch gekennzeichnet**,
daß die Arretiereinrichtung (16) zwei Sperrelemente (22) aufweist, die über einen Drehhebel (28) mittels desselben Betätigungselementes (24) betätigbar sind und mit Sperröffnungen (26a, 26b) von zwei Schwingengelenkarmen (18) zusammenwirken.

8. Halterung nach Anspruch 7,
**dadurch gekennzeichnet**,
daß die Sperrelemente (22) über jeweils eine Zugstange (34) mit dem Drehhebel (28) verbunden sind.

9. Halterung nach einem der Ansprüche 6 bis 8,
**dadurch gekennzeichnet**,
daß der bzw. jeder mit der Arretiereinrichtung (16) zusammenwirkende Schwingengelenkarm (18) mit dem Bereich der beiden Sperröffnungen (26a, 26b) in einem Schloßgehäuse (38) geführt ist, und daß das zugehörige Sperrelement (22) verschieblich in einer Führungsöffnung (40) des Schloßgehäuses (38) sitzt, wobei die Sperröffnungen (26a, 26b) in der ersten bzw. der zweiten Höhenposition zum Eingreifen des Sperrelementes (22) diesem und der Führungsöffnung (40) gegenüberliegend angeordnet sind.

10. Halterung nach Anspruch 5,
**dadurch gekennzeichnet**,
daß die Arretiereinrichtung (16) einerseits mindestens ein vorzugsweise ringförmiges, drehfest auf einer Drehwelle (64) wenigstens eines der Schwingengelenkarme (18) angeordnetes und zwei die beiden Höhenpositionen festlegende Arretierausnehmungen (66,68) aufweisendes Arretierelement (62) sowie andererseits als Sperrelement (22) mindestens einen Arretierhebel (70) aufweist, der in den beiden Höhenpositionen jeweils in eine der beiden Arretierausnehmungen (66,68) lösbar eingreift.

11. Halterung nach Anspruch 10,
**dadurch gekennzeichnet**,
daß zwei in Richtung einer Fahrzeug-Querachse (Y) gegenüberliegende Arretierhebel (70) über eine gemeinsame Arretierwelle (72) drehmomentschlüssig verbunden sind, wobei jeder Arretierhebel (70) mit einem gesonderten Arretierelement (62) von zwei gegenüberliegenden Schwingengelenkarmen (18) zusammenwirkt.

12. Halterung nach einem der Ansprüche 5 bis 11, **dadurch gekennzeichnet**,
daß zur Gewährleistung der federkraftbedingten Sperrstellung mindestens ein Federelement (42) vorgesehen ist, welches insbesondere als gewundene Schenkelfeder ausgebildet und zur Beaufschlagung des Drehhebels (28) bzw. des Arretierhebels (70) auf dessen Drehachse angeordnet ist.

13. Halterung nach einem der Ansprüche 1 bis 12,
**gekennzeichnet** durch zusätzliche Längsführungsmittel (50) zum Verstellen des Sitzes (1) in Richtung einer horizontalen Fahrzeug-Längsachse (X).

14. Halterung nach einem der Ansprüche 1 bis 13,
**gekennzeichnet** durch zusätzliche Querverstellmittel (52) derart, daß der Sitz (1) in Richtung einer horizontalen Fahrzeug-Querachse (Y) relativ zu den Basismitteln (12) zwischen zwei definierten Seitenpositionen um einen definierten Seitenversatz (B) verstellbar und in den beiden Seitenpositionen jeweils lösbar arretierbar ist.

15. Halterung nach Anspruch 14,
**dadurch gekennzeichnet**,
daß die Querverstellmittel (52) als Parallelschwingeneinrichtung mit vier Schwingengelenkarmen (60) ausgebildet sind, die zwischen den beiden Seitenpositionen eine Schwenkbewegung über einen Schwenkwinkel von etwa 180° ausführen.

16. Halterung nach Anspruch 14,
**dadurch gekennzeichnet**,
daß die Querverstellmittel (52) als Schiebeführung ausgebildet sind.

17. Halterung nach Anspruch 16,
**dadurch gekennzeichnet**,
daß die Trägermittel (8) von mit dem Sitz (1) verbundenen Lagerelementen (80) gebildet sind, die auf mit den Basismitteln (12) über die Verstellmittel (14) verbundenen Querträgern (82) verschiebbar geführt sind.

18. Halterung nach einem der Ansprüche 14 bis 17,
**dadurch gekennzeichnet**,
daß eine der beiden Seitenpositionen eine - insbesondere durch Federkraft (F) erreichbare - Vorzugsposition darstellt.
